# EUROPÄISCHE PATENTSCHRIFT

(11) **EP 2 112 096 B1**
(45) Veröffentlichungstag und Bekanntmachung des Hinweises auf die Patenterteilung: **09.06.2010**
(21) Anmeldenummer: 08007741.5
(22) Anmeldetag: 22.04.2008
(51) Int. Cl.: B65G 13/071, B65G 23/26, B65G 47/26

(54) **Antrieb für eine Fördereinrichtung**
Drive for a transport device
Engrenage pour un dispositif de transport

(43) Veröffentlichungstag der Anmeldung: 28.10.2009
(73) Patentinhaber: ads-tec GmbH, 70771 Leinfelden-Echterdingen (DE)
(72) Erfinder: Frank, Jens, 71686 Remseck (DE); Greif, Andreas, 73235 Weilheim (DE)
(74) Vertreter: Wasmuth, Rolf

(56) Entgegenhaltungen:
- EP-A- 1 566 350
- US-A- 4 421 224

## Beschreibung

Die Erfindung betrifft einen Antrieb für eine Fördereinrichtung, bestehend aus einem Antriebsmotor für eine Transportbahn als Transportmittel für ein Warengut, wobei der Antrieb aus einer Vielzahl von flexiblen, endlosen Antriebsmitteln besteht, siehe z. B. US 4 421 224.

Der Erfindung liegt die Aufgabe zugrunde, einen Antrieb für eine Fördereinrichtung derart weiterzubilden, dass bei einfachem Aufbau und einem Stau des Warenflusses auf der Transportbahn die durch das Warengut blockierten Antriebsmittel automatisch aus dem Antriebsverbund ausgekoppelt werden.

Die Aufgabe wird erfindungsgemäß nach den Merkmalen des Anspruchs 1 gelöst.

Die Antriebsmittel sind als endlose Antriebsmittel mit einem Leertrum, Lasttrum und jeweils den Leertrum mit dem Lasttrum verbindende Umlenkabschnitte ausgebildet. Die Antriebsmittel liegen auf Antriebsrädern auf, wobei ein erstes Antriebsrad für ein ankommendes und ein zweites Antriebsrad für ein abgehendes Antriebsmittel auf gleicher Höhe nebeneinanderliegen. In Seitenansicht auf den Antrieb überlappen sich so die seitlichen nebeneinanderliegenden Antriebsmittel, wobei die auf gleicher Höhe nebeneinanderliegenden Antriebsräder nicht starr, sondern mittels Reibschluss drehfest miteinander gekoppelt sind. Wird im Antriebsverbund der Antriebsmittel ein Antriebsmittel blockiert, spricht die Rutschkupplung an, wodurch die blockierten Antriebsmittel aus dem Antriebsverbund ausgekoppelt sind.

Die Antriebsräder sind zweckmäßig auf einem gemeinsamen Achsbolzen gehalten, der in dem Tragrahmen der Fördereinrichtung drehbar gelagert ist. Dabei ist ein Antriebsrad zweckmäßig formschlüssig mit dem Achsbolzen verbunden, was vorteilhaft mittels einer Passfeder erfolgen kann. Das andere Antriebsrad ist mit einem Drehlager drehbar auf dem Achsbolzen gelagert, so dass das andere Antriebsrad relativ zum Achsbolzen drehen kann. Um auch über das andere Antriebsrad ein Drehmoment übertragen zu können, wird dieses mit vorgebbarer Kraft mittelbar oder unmittelbar an eine axiale Reibfläche des anderen Antriebsrades angedrückt. Bevorzugt ist das Antriebsrad über ein Druckstück mit vorgebbarer Federkraft an die Reibfläche angedrückt.

Zur Einstellung der vorgebbaren Federkraft ist vorgesehen, das auf das Druckstück wirkende Federpaket an einer Mutter abzustützen, die auf das freie Ende des Achsbolzens aufgeschraubt ist. Durch Drehen der Mutter kann der Benutzer die axiale Anpresskraft auf die Reibfläche und somit die Rutschkupplung einstellen, wodurch das maximal übertragbare Drehmoment vom Benutzer jederzeit einfach nachgestellt werden kann. Das freie Ende des Achsbolzens ist auf einer Seite des Tragrahmens für den Benutzer mit einfachem Werkzeug frei zugänglich.

In Weiterbildung der Erfindung wird die Reibfläche der Rutschkupplung durch einen Reibring gebildet, der zwischen einem Antriebsrad und dem Achsbolzen angeordnet sein kann; vorzugsweise ist der Reibring zwischen dem einen und dem anderen Antriebsrad auf dem gemeinsamen Achsbolzen vorgesehen. Dabei kann es zweckmäßig sein, zusätzlich oder alternativ zu dem angeordneten Reibring, zwischen dem Druckstück und dem anderen Antriebsrad einen weiteren Reibring vorzusehen.

Der erfindungsgemäße Antrieb ist zweckmäßig derart ausgebildet, dass im Tragrahmen eine Vielzahl von in Förderrichtung nebeneinanderliegenden Achsbolzen vorgesehen sind und benachbarte Achsbolzen über je ein flexibles Antriebsmittel im Wesentlichen drehfest mit benachbarten Achsbolzen verbunden sind. Jeder einzelne Achsbolzen ist über ein Antriebsrad mit einem ersten benachbarten Achsbolzen und über ein anderes Antriebsrad mit einem zweiten benachbarten Achsbolzen verbunden. Dabei liegt das eine Antriebsrad starr drehfest auf dem Achsbolzen fest, während das andere Antriebsrad mit dem Achsbolzen über die Rutschkupplung drehfest verbunden ist.

Die Ausgestaltung des Antriebs kann so vorgesehen sein, dass die Antriebsmittel selbst die Transportbahn bilden oder aber, dass die Transportbahn von in Förderrichtung aufeinanderfolgende Rollen gebildet ist, wobei jede Rolle auf einem Achsbolzen gelagert und von diesem Achsbolzen angetrieben ist.

Weitere Merkmale der Erfindung ergeben sich aus den weiteren Ansprüchen, der Beschreibung und der Zeichnung, in der nachfolgende im Einzelnen beschriebene Ausführungsbeispiele der Erfindung dargestellt sind. Es zeigen:
- Fig. 1: in schematischer Draufsicht einen Ausschnitt aus einer Fördereinrichtung mit einer Transportbahn als Transportmittel für ein Warengut,
- Fig. 2: in schematischer Draufsicht einen Ausschnitt aus einer Fördereinrichtung für eine aus Rollen gebildete Transportbahn als Transportmittel für ein Warengut,
- Fig. 3: in schematischer Seitenansicht ein endloses Antriebsmittel zwischen einem ersten und einem zweiten Achsbolzen,
- Fig. 4: einen Schnitt durch das Antriebsende eines Achsbolzens,

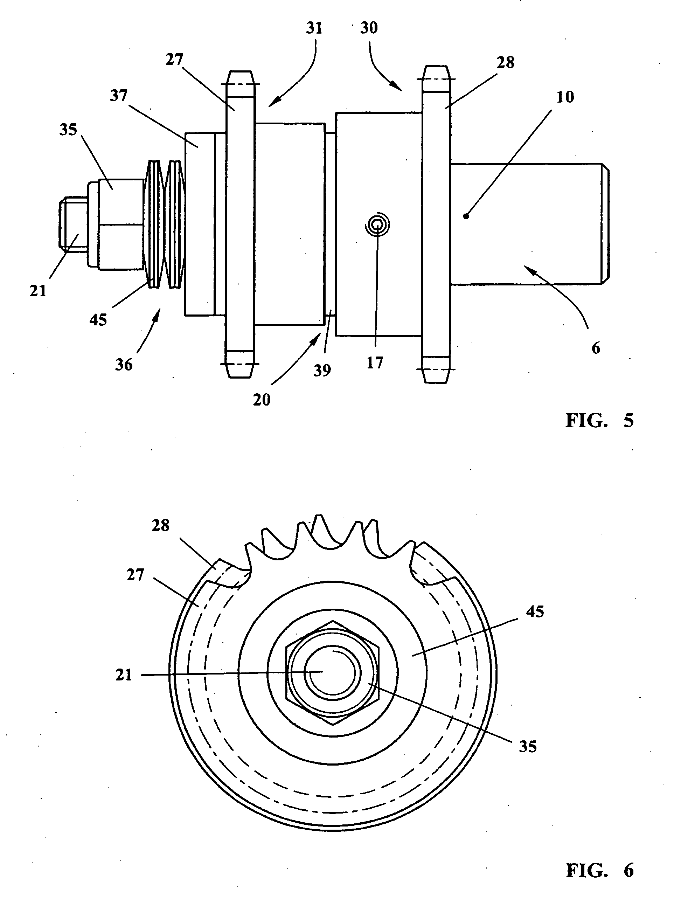

- Fig. 5: eine Ansicht auf das Antriebsende eines Achsbolzens,
- Fig. 6: eine Stirnansicht auf das Antriebsende eines Achsbolzens.

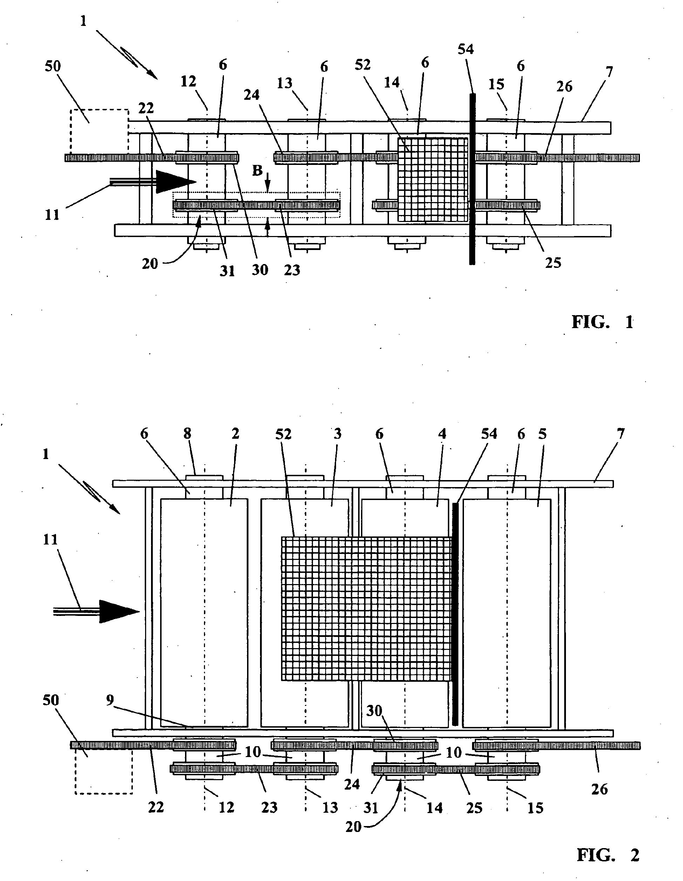

Der in Fig. 1 gezeigte Ausschnitt aus einer Fördereinrichtung zeigt eine Transportbahn 1 mit einer Vielzahl von in Längsrichtung der Transportbahn nebeneinander angeordneten Achsbolzen 6, die mit ihren Drehachsen 12, 13, 14, 15 zueinander etwa parallel liegen. Jeder einzelne Achsbolzen 6 ist im Tragrahmen 7 drehbar gehalten. Auf jedem Achsbolzen 6 liegen nebeneinander Antriebsräder 30, 31, im gezeigten Ausführungsbeispiel jeweils zwei Antriebsräder 30, 31. Es kann vorteilhaft sein, zusätzliche Antriebsräder anzuordnen.

Die Antriebsräder 30, 31 nebeneinanderliegender Achsbolzen 6 sind über flexible Antriebsmittel 22, 23, 24, 25, 26 im Wesentlichen drehfest miteinander verbunden, derart, dass alle Achsbolzen von einem gemeinsamen Antriebsmotor 50 angetrieben werden.

Im gezeigten Ausführungsbeispiel nach Fig. 1 ist der rechts im Bild gezeigte erste Achsbolzen 6 über ein flexibles, endloses Antriebsmittel 25 mit dem unter dem Warengut 52 liegenden Achsbolzen 6 verbunden und über ein weiteres flexibles Antriebsmittel 24 mit dem nächsten entgegen der Förderrichtung 11 folgenden Achsbolzen 6 verbunden. Jeder Achsbolzen 6 ist somit über ein erstes Antriebsrad 30 und ein Antriebsmittel 24 mit einem ersten benachbarten Achsbolzen 6 und über ein zweites Antriebsrad 31 und ein flexibles Antriebsmittel 25 mit dem anderen benachbarten Achsbolzen verbunden. In Förderrichtung 11 überlappen sich somit die nebeneinanderliegenden Antriebsmittel 22, 23, 24, 25 und 26.

Im gezeigten Ausführungsbeispiel sind die Antriebsräder 30 und 31 Kettenräder und die Antriebsmittel 22, 23, 24, 25 und 26 Gliederketten. Dadurch ist - unter Vernachlässigung des Antriebsspiels - eine drehfeste Kopplung der in Förderichtung 11 hintereinander angeordneten Achsbolzen 6 gewährleistet.

Im Ausführungsbeispiel nach Fig. 1 bilden die endlosen, flexiblen Antriebsmittel 22, 23, 24, 25, 26 gleichzeitig die Transportbahn und bilden das Transportmittel für das Warengut 52. Die Breite B eines Antriebsmittels kann dem zu fördernden Warengut angepasst sein.

Die im Ausführungsbeispiel nach Fig. 1 gleichzeitig als Transportmittel eingesetzten Antriebsmittel 22, 23, 24, 25, 26 liegen jeweils auf den Antriebsrädern 30, 31 eines jeden Achsbolzens 6 auf, wobei ein Antriebsrad 30 mit dem Achsbolzen 6 starr drehfest verbunden ist und das zweite Antriebsrad 31 mit dem Achsbolzen 6 über eine Rutschkupplung 20 drehfest verbunden ist.

Wird durch ein Stauelement 54 der Warenfluss in Förderrichtung 11 angehalten, würde das Antriebsmittel - im Ausführungsbeispiel die Antriebsmittel 24 und 25 - unter dem Warengut 52 durchlaufen und könnten dieses beschädigen. Aufgrund der angeordneten Rutschkupplung 20 wird der Antriebsverbund in Förderrichtung 11 unterbrochen, so dass die Antriebsmittel 24 und 25 stehen bleiben, die Achsbolzen 6 unter dem Warengut also nicht mehr drehen. Die Rutschkupplung 20 überträgt somit ein Drehmoment, der kleiner ist als der Reibschluss zwischen dem Warengut 52 und der Transportbahn 1.

Im Ausführungsbeispiel nach Fig. 2 ist ein Ausschnitt aus einer Rollenbahn gezeigt, der Teil einer Transportbahn 1 ist.

Die Rollenbahn weist eine Vielzahl von in Längsrichtung der Bahn nebeneinander angeordneter Rollen 2, 3, 4 und 5 auf, die auf Achsbolzen 6 angeordnet sind und - vorzugsweise gemeinsam mit diesen - um die zugeordneten Drehachsen 12, 13, 14 und 15 drehen. Jede einzelne Rolle 2, 3, 4, 5 wird dabei von dem sie tragenden Achsbolzen 6 angetrieben.

Die Rollen 2, 3, 4, 5 sind mit dem zentralen Achsbolzen 6 in dem Tragrahmen 7 gehalten, wozu der Achsbolzen 6 an seinen Enden 8, 9 im Tragrahmen 7 drehbar gelagert ist. Der Antrieb für die Fördereinrichtung ist entsprechend der Darstellung in Fig. 1 ausgebildet, jedoch werden die Antriebsmittel 22, 23, 24, 25, 26 ausschließlich als Antriebsmittel genutzt und liegen - wie die Draufsicht in Fig. 2 zeigt - neben dem Tragrahmen 7. Alle Rollen 2, 3, 4, 5 der Rollenbahn werden von einem Antriebsmotor 50 angetrieben.

Im gezeigten Ausführungsbeispiel ist die unter dem Warengut 52 liegende Rolle 4 mit der ersten, rechts in Fig. 2 gezeigten vorderen Rolle 5 über ein Antriebsmittel 25 verbunden; die gleiche Rolle 4 ist mit einer zweiten benachbarten, hinteren Rolle 3 über ein Antriebsmittel 24 drehfest verbunden. Zum Auflegen der Antriebsmittel trägt jeder der Achsbolzen 6 an einem Antriebsende 10 ein erstes Antriebsrad 30 und auf dem gleichen Antriebsende 10 des Achsbolzens ein zweites Antriebsrad 31.

Im gezeigten Ausführungsbeispiel sind die Antriebsräder 30 und 31 Kettenräder und die Antriebsmittel Gliederketten. Dadurch ist - unter Vernachlässigung des Antriebsspiels - eine drehfeste Kopplung der in Förderrichtung 11 hintereinander angeordneten Rollen 2, 3, 4, 5 gewährleistet.

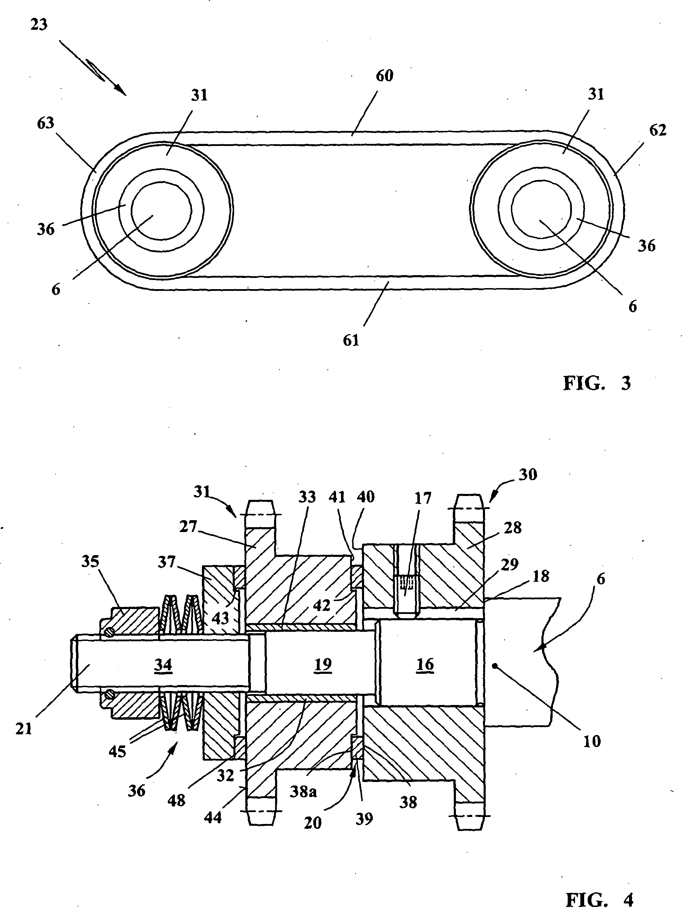

Jedes Antriebsmittel 22, 23, 24, 25, 26 ist ein flexibles, endloses Antriebsmittel, von denen das Antriebsmittel 23 in Fig. 3 in Seitenansicht gezeigt ist. Das Antriebsmittel 23 liegt auf einem Antriebsrad 30 eines ersten Achsbolzens 6 und auf einem zweiten Antriebsrad 31 eines zweiten Achsbolzens 6 auf. Es verbindet parallel nebeneinanderliegende Achsbolzen 6. Das Antriebsmittel hat einen oberen Lasttrum 60 und einen unteren Leertrum 61, wobei Lasttrum und Leertrum jeweils durch einen vorderen Umlenkabschnitt 62 und durch einen hinteren Umlenkabschnitt 63 miteinander verbunden sind und so das endlose Antriebsmittel bilden. In Fig. 3 ist das Antriebsmittel 23 als Riemen dargestellt; andere Ausgestaltungen, insbesondere als Gliederkette, sind zweckmäßig.

Wie aus der Schnittdarstellung in Fig. 4 ersichtlich, sind auf das freie Ende des Achsbolzens 6 die Antriebsräder 30 und 31 ebenso wie eine Rutschkupplung 20 aufgefädelt und auf dem Achsbolzen 6 festgelegt. Vorzugsweise ist ein Antriebsende 10 des Achsbolzens 6 zur Montage der Antriebsräder 30, 31 und der Rutschkupplung 20 angepasst ausgebildet.

Das erste Antriebsrad 30 ist auf einem ersten, gestuften Abschnitt 16 des Antriebsendes 10 des Achsbolzens 6 drehfest festgelegt, wobei das als Zahnrad 28 ausgebildete Antriebsrad 30 formschlüssig auf dem Abschnitt 16 des Achsbolzens 6 festgelegt ist. Hierzu ist im Ausführungsbeispiel eine Passfeder 29 vorgesehen, welche die drehmomentübertragende Verbindung herstellt. Mittels einer Sicherungsschraube 17 ist das Antriebsrad 30 axial gesichert.

Im gezeigten Ausführungsbeispiel liegt das Antriebsrad 30 stirnseitig an einer Ringschulter 18 des Antriebsbolzens 6 an, die am Durchmessersprung zwischen dem Achsbolzen 6 und dem im Durchmesser verringerten Abschnitt 16 ausgebildet ist. Die Ringschulter 18 dient der axialen Abstützung des anliegenden Antriebsrades 30.

An den Sitzabschnitt 16 des ersten Antriebsrades 30 schließt zum freien Ende 21 des Achsbolzens 6 ein Lagerabschnitt 19 an, auf dem über ein Lager 32 das zweite Antriebsrad 31, das ebenfalls als Zahnrad 27 ausgebildet ist, drehbar gelagert ist. Das Drehlager 32 ist im gezeigten Ausführungsbeispiel bevorzugt als Gleitlager in Form einer Gleithülse 33 ausgebildet. Auch ein Wälzlager kann zweckmäßig sein.

Zum freien Ende 21 des Antriebsendes 10 des Achsbolzens 6 hin schließt an den Lagerabschnitt 19 ein im Durchmesser kleinerer Gewindeabschnitt 34 an, auf den eine Mutter 35 aufgeschraubt ist. An der Mutter 35 stützt sich ein Federpaket 36 ab, dessen anderes Ende an einem Druckstück 37 anliegt, welches das auf dem Lager 32 drehbar gehaltene und axial verschiebbare zweite Antriebsrad 31 axial gegen eine Reibfläche 38 drückt, über welche ein Drehmoment auf den Achsbolzen 6 und damit auf die drehfest mit dem Achsbolzen 6 verbundene Rolle 5 übertragen werden kann.

Im gezeigten Ausführungsbeispiel ist die Reibfläche 38 eine Ringfläche und wird von einem Reibring 39 gebildet, der zwischen den einander zugewandten Stirnseiten 40 und 41 der Antriebsräder 30 und 31 liegt. Es kann zweckmäßig sein, den Reibring 39 lose zwischen den Stirnseiten 40 und 41 anzuordnen, so dass sowohl auf der Stirnfläche 40 des ersten Antriebsrades 30 als auch auf der Stirnfläche 41 des zweiten Antriebsrades 31 eine Reibfläche 38 bzw. 38a ausgebildet ist. Um den Reibring 39 etwa in seiner zentralen Einbaulage zu halten, ist eine Sitzschulter 42 auf einer Stirnseite der Antriebsräder, im Ausführungsbeispiel auf der Stirnseite 41 des Antriebsrades 31, ausgebildet.

Es kann zweckmäßig sein, zwischen dem Druckstück 37 und dem zweiten Antriebsrad 31 einen weiteren Reibring 48 anzuordnen der alternativ oder zusätzlich zum Reibring 38 vorgesehen sein kann. Der Reibring 48 ist über eine Sitzschulter 43 am Druckstück 37 etwa zentriert und liegt auf der zugewandten Stirnseite 44 des zweiten Antriebsrades 31 reibschlüssig an.

Das Federpaket 36 ist im gezeigten Ausführungsbeispiel aus Tellerfedern 45 gebildet, die auf den Gewindeabschnitt 34 des Achsbolzens 6 aufgefädelt sind. Mittels der Schraubmutter 35 kann die Gesamtanordnung axial verspannt werden, wobei die Schraubmutter 35 auf das Federpaket 36, dieses auf die Druckplatte 37 und über den Reibring 48 auf das zweite Antriebsrad 31 wirkt, welches über den Reibring 39 auf das erste Antriebsrad 30 wirkt, welches drehfest mit dem Achsbolzen 6 und damit drehfest mit der Rolle 2, 3, 4 oder 5 verbunden ist. Über die Schraubmutter 35 kann die Federvorspannung des Tellerfederpaketes 36 eingestellt werden, wodurch die mittels des Reibrings 39 gebildete Rutschkupplung 20 in ihrem Ansprechverhalten eingestellt und insbesondere nachgestellt werden kann. Eine Demontage des Antriebsendes eines Achsbolzens 6 ist zur Nachstellung der Anpresskraft ebenso wenig notwendig wie Spezialwerkzeug; es ist ein üblicher Schraubenschlüssel zum Drehen der Schraubmutter 35 ausreichend.

Der erfindungsgemäße Aufbau des Antriebs am Antriebsende 10 eines Achsbolzens 6 arbeitet wie folgt:

Die Antriebsmittel 22, 23, 24, 25, 26 einer Fördereinrichtung einer Transportbahn 1 werden gemeinschaftlich über einen nicht näher dargestellten Antriebsmotor 50 in Förderrichtung 11 angetrieben. Ein auf das Transportmittel aufgesetztes Warengut 52 wird in Förderrichtung 11 transportiert, wobei im Ausführungsbeispiel nach Fig. 1 die Transportmittel die Antriebsmittel 22 bis 26 selbst bilden und im Ausführungsbeispiel nach Fig. 2 auf den Achsbolzen 6 gehaltene Rollen 2 bis 5 die Transportmittel bilden.

Läuft das Warengut 52 auf ein Stauelement 54 auf, werden die Achsbolzen 6 der Rollen 3 und 4 aufgrund der Friktion zwischen dem Warengut 52 und der Oberfläche der Rollen 3 und 4 blockiert. Die Einstellung der Rutschkupplung 20 ist nun so vorgesehen, dass die Friktion zwischen dem Warengut 52 und der Oberfläche der Rollen 3 und 4 nicht überschritten werden kann, damit die Rollen 3, 4 unter dem Warengut 52 nicht durchdrehen können.

Aufgrund der blockierten Rollen 3 und 4 und des weiterhin laufenden Antriebsmotors 50 wird die Rutschkupplung 20 z. B. des Achsbolzens 6 der Rolle 3 ansprechen, wodurch die Achsbolzen der Rollen 3 und 4 sofort aus dem Antriebsstrang ausgekoppelt sind. Die Rollen 3, 4 stehen; der Antriebsmotor 50 kann weiterlaufen.

Sobald das Stauelement 54 abgesenkt bzw. aus dem Weg des Warengutes 52 ausgeschwenkt wird, entfällt die Blockade der Achsbolzen 6 der Rollen 3 und 4, so dass die Rutschkupplung 20 der Rolle 3 wieder greift und die Rollen 3 und 4 im Rollenverbund wieder mit angetrieben sind.

Die Wirkung der Rutschkupplung 20 ist unabhängig von der Förderrichtung 11; sowohl in als auch entgegen der Förderrichtung 11 können die Achsbolzen der Rollen 2, 3, 4, 5 angetrieben sein. Die Wirkung der Kupplung selbst bleibt erhalten.

## Patentansprüche

1. Antrieb für eine Fördereinrichtung, bestehend aus einem Antriebsmotor (50) für eine Transportbahn (1) als Transportmittel für ein Warengut (52), wobei der Antrieb aus einer Vielzahl von flexiblen, endlosen Antriebsmitteln (22, 23, 24, 25, 26) besteht, und jedes endlose Antriebsmittel (22, 23, 24, 25, 26) einen Leertrum (60), einen Lasttrum (61) sowie jeweils den Leertrum (60) mit dem Lasttrum (61) verbindende Umlenkabschnitte (62, 63) aufweist, mit drehbar an einem Tragrahmen (7) gehaltenen Antriebsrädern (30, 31), wobei jeweils ein erstes Antriebsrad (30) für ein ankommendes und ein zweites Antriebsrad (31) für ein abgehendes Antriebsmittel (22, 23, 24, 25, 26) auf etwa gleicher Höhe nebeneinander liegen, derart, dass seitlich nebeneinander liegende Antriebsmittel (22, 23, 24, 25, 26) einander in Förderrichtung (11) überlappen, **dadurch gekennzeichnet, dass** die auf gleicher Höhe nebeneinander liegenden Antriebsräder (30, 31) über eine Rutschkupplung drehfest miteinander gekoppelt sind.

2. Antrieb nach Anspruch 1,
**dadurch gekennzeichnet, dass** die Antriebsräder (30, 31) auf einem gemeinsamen Achsbolzen (6) gehalten sind, der in dem Tragrahmen (7) drehbar gelagert ist.

3. Antrieb nach Anspruch 2,
**dadurch gekennzeichnet, dass** ein Antriebsrad (30) formschlüssig mit dem Achsbolzen (6) verbunden ist.

4. Antrieb nach Anspruch 3,
**dadurch gekennzeichnet, dass** das eine Antriebsrad (30) mittels einer Passfeder (29) drehfest mit dem Achsbolzen (6) verbunden ist.

5. Antrieb nach einem der Ansprüche 2 bis 4,
**dadurch gekennzeichnet, dass** das andere Antriebsrad (31) mit einem Lager (32), vorzugsweise einem Gleitlager (33) drehbar auf dem Achsbolzen (6) gelagert ist.

6. Antrieb nach einem der Ansprüche 1 bis 5,
**dadurch gekennzeichnet, dass** das eine Antriebsrad (30) über eine axiale Reibfläche (38, 38a) ein Drehmoment auf das andere Antriebsrad (31) überträgt.

7. Antrieb nach Anspruch 6,
**dadurch gekennzeichnet, dass** das eine Antriebsrad (30) über ein Druckstück (37) mit einer vorgebbaren Kraft an die Reibfläche (38, 38a) des anderen Antriebsrades (31) andrückbar ist.

8. Antrieb nach Anspruch 7,
**dadurch gekennzeichnet, dass** auf das Druckstück (37) ein Federpaket (36) wirkt, das vorzugsweise aus Tellerfedern (45) besteht.

9. Antrieb nach Anspruch 8,
**dadurch gekennzeichnet, dass** das Federpaket (36) auf ein freies Ende (21) des Achsbolzens (6) aufgefädelt ist und sich an einer Mutter (35) abstützt, die auf das freie Ende (21) des Achsbolzens (6) aufschraubbar ist.

10. Antrieb nach einem der Ansprüche 7 bis 9,
**dadurch gekennzeichnet, dass** die Reibfläche (38, 38a) eine Ringfläche ist, die insbesondere an einem Reibring (39, 48) ausgebildet ist.

11. Antrieb nach Anspruch 10,
**dadurch gekennzeichnet, dass** der Reibring (39) zwischen den Antriebsrädern (30, 31) angeordnet ist, vorzugsweise zwischen dem Druckstück (37) und einem Antriebsrad (31) angeordnet ist.

12. Antrieb nach Anspruch 10,
**dadurch gekennzeichnet, dass** der Reibring (48) zwischen dem Antriebsrad (31) und dem Achsbolzen (6) angeordnet ist.

13. Antrieb nach einem der Ansprüche 1 bis 12,
**dadurch gekennzeichnet, dass** im Tragrahmen (7) eine Vielzahl von in Förderrichtung (11) nebeneinander liegenden Achsbolzen (6) gehalten sind und benachbarte Achsbolzen (6) über je ein flexibles Antriebsmittel (22, 23, 24, 25, 26) im Wesentlichen drehfest miteinander verbunden sind, wobei jeder Achsbolzen (6) ein erstes Antriebsrad (30) zur Antriebsverbindung mit einem ersten benachbarten Achsbolzen (6) und ein zweites Antriebsrad (31) zur Antriebsverbindung mit einem zweiten benachbarten Achsbolzen (6) aufweist, und das erste Antriebsrad (30) mit dem Achsbolzen (6) starr drehfest verbunden ist und das zweite Antriebsrad (31) mit dem Achsbolzen (6) über die Rutschkupplung (20) drehfest verbunden ist.

14. Antrieb nach einem der Ansprüche 1 bis 13,
**dadurch gekennzeichnet, dass** die Antriebsmittel (22, 23, 24, 25, 26) als Förderglieder die Transportbahn bilden.

15. Antrieb nach einem der Ansprüche 1 bis 14,
**dadurch gekennzeichnet, dass** die Transportbahn von in Förderrichtung (11) aufeinanderfolgenden Rollen (2, 3, 4, 5) gebildet ist, wobei jede Rolle (2, 3, 4, 5) auf je einem Achsbolzen (6) gelagert und von diesem Achsbolzen (6) angetrieben ist.

16. Antrieb nach einem der Ansprüche 1 bis 15,
**dadurch gekennzeichnet, dass** die Antriebsräder (30, 31) Zahnräder (27, 28) sind und die Antriebsmittel (22, 23, 24, 25, 26) durch Gliederketten gebildet sind.

## Claims

1. Drive for a transport device, consisting of a drive motor (50) for a transport track (1) designed for the transport of goods (52), such that the drive comprises a plurality of flexible, endless drive means (22, 23, 24, 25, 26) and each of the said endless drive means (22, 23, 24, 25, 26) comprises a return strand (60), a load strand (61) and respective guiding sections (62, 63) which connect the return strand (60) to the load strand (61), with drive wheels (30, 31) held and able to rotate on a supporting frame (7), such that in each case a first drive wheel (30) for an incoming drive means (22, 23, 24, 25, 26) and a second drive wheels (31) for an outgoing drive means (22, 23, 24, 25, 26) are positioned at approximately the same level next to one another, in such manner that drive means (22, 23, 24, 25, 26) positioned laterally next to one another overlap in the conveying direction (11),
**characterised in that** the drive wheels (30, 31) positioned at the same level next to one another are coupled rotationally fixed to one another by means of a slipping clutch.

2. Drive according to Claim 1,
**characterised in that** the drive wheels (30, 31) are held on a common axle spindle (6) which is mounted to rotate in the supporting frame (7).

3. Drive according to Claim 2,
**characterised in that** one drive wheel (30) is connected with positive interlock to the axle spindle (6).

4. Drive according to Claim 3,
**characterised in that** one drive wheel (30) is connected rotationally fixed to the axle spindle (6) by means of an adjusting spring.

5. Drive according to any of Claims 2 to 4,
**characterised in that** the other drive wheel (31) is mounted to rotate on the axle spindle (6) by means of a bearing (32), preferably a slide bearing (33).

6. Drive according to any of Claims 1 to 5,
**characterised in that** one drive wheel (30) transmits a torque to the other drive wheel (31) by means of an axial friction surface (38, 38a).

7. Drive according to Claim 6,
**characterised in that** one drive wheel (30) can be pressed against the friction surface (38, 38a) of the other drive wheel (31) with a.specified force by means of a pressure element (37).

8. Drive according to Claim 7,
**characterised in that** a spring packet (36) preferably consisting of cup springs (45) acts upon the pressure element (37).

9. Drive according to Claim 8,
**characterised in that** the spring packet (36) is fitted over a free end (21) of the axle spindle (6) and is supported against a nut (35) which can be screwed onto the said free end (21) of the axle spindle (6).

10. Drive according to any of Claims 7 to 9,
**characterised in that** the friction surface (38, 38a) is an annular surface, in particular formed on a friction ring (39, 48).

11. Drive according to Claim 10,
**characterised in that** the friction ring (39) is arranged between the drive wheels (30, 31), preferably between the pressure element (37) and a drive wheel (31).

12. Drive according to Claim 10,
**characterised in that** the friction ring (48) is arranged between the drive wheel (31) and the axle spindle (6).

13. Drive according to any of Claims 1 to 12,
**characterised in that** a plurality of axle spindles (6) are held next to one another in the conveying direction (11) in the supporting frame (7), and adjacent axle spindles (6) are connected in each case essentially rotationally fixed to one another by a flexible drive means (22, 23, 24, 25, 26), such that each axle spindle (6) has a first drive wheel (30) forming a drive connection with a first adjacent axle spindle (6) and a second drive wheel (31) forming a drive connection with a second adjacent axle spindle (6), and the first drive wheel (30) is permanently connected rotationally fixed to the axle spindle (6) whereas the second drive wheel (31) is connected rotationally fixed with the axle spindle (6) via the slipping clutch (20).

14. Drive according to any of Claims 1 to 13,
**characterised in that** the drive means (22, 23, 24, 25, 26) are conveyor elements forming the transport track.

15. Drive according to any of Claims 1 to 14,
**characterised in that** the transport track is formed by rollers (2, 3, 4, 5) positioned one after another in the conveying direction (11), each roller (2, 3, 4, 5) being mounted on a respective axle spindle (6) and being driven by that axle spindle (6).

16. Drive according to any of Claims 1 to 15,
**characterised in that** the drive wheels (30, 31) are gearwheels (27, 28) and the drive means (22, 23, 24, 25, 26) are formed by link chains.

## Revendications

1. Entraînement pour un dispositif de transport, composé d'un moteur d'entraînement (50) pour une bande de transport (1) comme moyen de transport pour un produit (52), étant précisé que ledit entraînement se compose d'un grand nombre de moyens d'entraînement flexibles sans fin (22, 23, 24, 25, 26) et que chaque moyen de transport sans fin (22, 23, 24, 25, 26) comporte un brin vide (60), un brin porteur (61) et des parties de déviation (62, 63) qui relient le brin vide (60) au brin porteur (61), avec des roues d'entraînement (30, 31) fixées en rotation à un châssis porteur (7), et étant précisé qu'à chaque fois, une première roue d'entraînement (30) pour un moyen de transport (22, 23, 24, 25, 26) arrivant et une seconde roue d'entraînement (31) pour un moyen d'entraînement (22, 23, 24, 25, 26) partant sont placées côte à côte à peu près à la même hauteur de telle sorte que des moyens de transport (22, 23, 24, 25, 26) placés côté à côte latéralement se chevauchent dans le sens de transport (11),
**caractérisé en ce que** les roues d'entraînement (30, 31) placées côte à côte à la même hauteur sont accouplées mutuellement, solidaires en rotation, par l'intermédiaire d'un accouplement patinant.

2. Entraînement selon la revendication 1,
**caractérisé en ce que** les roues d'entraînement (30, 31) sont fixées sur un axe commun (6) qui est monté en rotation dans le châssis porteur (7).

3. Entraînement selon la revendication 2,
**caractérisé en ce qu'**une roue d'entraînement (30) est reliée par complémentarité de forme à l'axe (6).

4. Entraînement selon la revendication 3,
**caractérisé en ce que** l'une (30) des roues d'entraînement est reliée solidaire en rotation à l'axe (6) à l'aide d'une clavette (29).

5. Entraînement selon l'une des revendications 2 à 4,
**caractérisé en ce que** l'autre roue d'entraînement (31) est montée en rotation sur l'axe (6) à l'aide d'un palier (32), de préférence un palier lisse (33).

6. Entraînement selon l'une des revendications 1 à 5,
**caractérisé en ce que** l'une (30) des roues d'entraînement transmet un couple de rotation à l'autre roue d'entraînement (31) par l'intermédiaire d'une surface de friction axiale (38, 38a).

7. Entraînement selon la revendication 6,
**caractérisé en ce que** l'une (30) des roues d'entraînement est apte à être pressée avec une force apte à être prédéfinie contre la surface de friction (38, 38a) de l'autre roue d'entraînement (31) par l'intermédiaire d'un élément presseur (37).

8. Entraînement selon la revendication 7,
**caractérisé en ce qu'**un bloc-ressort (36) qui se compose de préférence de ressorts à disques (45) agit sur l'élément presseur (37).

9. Entraînement selon la revendication 8,
**caractérisé en ce que** le bloc-ressort (36) est enfilé sur une extrémité libre (21) de l'axe (6) et s'appuie sur un écrou (35) qui est apte à être vissé sur ladite extrémité libre (21) de l'axe (6).

10. Entraînement selon l'une des revendications 7 à 9,
**caractérisé en ce que** la surface de friction (38, 38a) est une surface annulaire qui est formée en particulier sur une bague de friction (39, 48).

11. Entraînement selon la revendication 10,
**caractérisé en ce que** l'anneau de friction (39) est disposé entre les roues d'entraînement (30, 31), de préférence entre l'élément presseur (37) et une roue d'entraînement (31).

12. Entraînement selon la revendication 10,
**caractérisé en ce que** l'anneau de friction (48) est disposé entre la roue d'entraînement (31) et l'axe (6).

13. Entraînement selon l'une des revendications 1 à 12,
**caractérisé en ce que** dans le châssis porteur (7) est fixé un grand nombre d'axes (6) placés côte à côte dans le sens de transport (11), et des axes (6) voisins sont reliés entre eux, globalement solidaires en rotation, par des moyens d'entraînement flexibles respectifs (22, 23, 24, 25, 26), étant précisé que chaque axe (6) présente une première roue d'entraînement (30) pour la liaison d'entraînement avec un premier axe (6) voisin, et une seconde roue d'entraînement (31) pour la liaison d'entraînement avec un second axe (6) voisin, et que la première roue d'entraînement (30) est reliée rigidement, solidaire en rotation, à l'axe (6) et la seconde roue d'entraînement (31) est reliée solidaire en rotation à l'axe (6) par l'intermédiaire de l'accouplement patinant (20).

14. Entraînement selon l'une des revendications 1 à 13,
**caractérisé en ce que** les moyens d'entraînement (22, 23, 24, 25, 26) sous la forme de maillons de transport forment la bande de transport.

15. Entraînement selon l'une des revendications 1 à 14,
**caractérisé en ce que** la bande de transport est formée par des rouleaux (2, 3, 4, 5) qui se suivent dans le sens de transport (11), chaque rouleau (2, 3, 4, 5) étant monté sur un axe (6) et étant entraîné par cet axe (6).

16. Entraînement selon l'une des revendications 1 à 15,
**caractérisé en ce que** les roues de transport (30, 31) sont des roues dentées (27, 28) et les moyens d'entraînement (22, 23, 24, 25, 26) sont formés par des chaînes à maillons.
